# EUROPÄISCHE PATENTSCHRIFT

(11) **EP 1 983 325 B1**
(45) Veröffentlichungstag und Bekanntmachung des Hinweises auf die Patenterteilung: **29.10.2014**
(21) Anmeldenummer: 08000999.6
(22) Anmeldetag: 19.01.2008
(51) Int. Cl.: G01M 9/06, G01M 9/04

(54) **Vorrichtung zum Einstellen einer Raumlage für ein Kraftfahrzeug**
Apparatus for adjusting the position of a motor vehicle
Dispositif de régulation de la position d'un véhicule automobile

(30) Priorität: 18.04.2007 DE 102007018166
(43) Veröffentlichungstag der Anmeldung: 22.10.2008
(73) Patentinhaber: Dr. Ing. h.c. F. Porsche AG, 70435 Stuttgart (DE)
(72) Erfinder: Pfadenhauer, Michael, 71263 Mühlgasse (DE)

(56) Entgegenhaltungen:
- EP-A1- 0 534 645
- DE-A1- 4 418 625
- DE-A1- 10 144 111
- DE-A1- 10 352 212
- US-A- 4 593 920
- US-A1- 2005 236 781

## Beschreibung

Die vorliegende Erfindung betrifft eine Vorrichtung zum Einstellen einer Raumlage eines Fahrzeugs relativ zu einem Untergrund, auf dem das Fahrzeug mit seinen Rädern steht, insbesondere in einem Windkanal.

Aus der DE 198 15 312 C1 ist eine Vorrichtung bekannt, mit deren Hilfe ein Fahrzeug in eine Messstrecke eines Windkanals einbringbar ist. Während des Messbetriebs ist diese Vorrichtung deaktiviert, indem sie in eine die Messung nicht beeinflussende beziehungsweise störende Warteposition überführt wird.

Aus der DE 42 38 691 C2 ist es bekannt, bei Windkanalmodellen Räder so zu lagern, dass sie selbststabilisierend angeordnet sind, um sich einstellende Störungen selbsttätig kompensieren zu können.

EP 0 534 645 offenbart eine Anordnung zur Einstellung und Erfassung des Fahrzeugniveaus. Dabei werden vorhandene Niveauregler benutzt sowie ein Abstands-sensor zur Messung des Bodenabstands. Die Anordnung dient zur Kalibrierung der Niveauregelung.

Bei Windkanaluntersuchungen von Kraftfahrzeugen, insbesondere von Sportfahrzeugen oder Rennfahrzeugen, kann es erforderlich sein, die Raumlage des Fahrzeugs relativ zum Untergrund, auf dem das Fahrzeug mit seinen Rändern steht, zu verändern, beispielsweise um die Auswirkungen von Raumlageänderungen des Fahrzeugs aufgrund dynamischer Vorgänge während des Fahrzeugbetriebs, wie zum Beispiel Lenk-, Brems- und Beschleunigungsvorgänge, zu simulieren und im Hinblick auf die aerodynamischen Parameter des Fahrzeug zu untersuchen. Insbesondere bei Rennfahrzeugen sind aufgrund des geringen Bodenabstands große aerodynamische Änderungen bei Lageänderungen im Millimeterbereich zu erwarten.

Die vorliegende Erfindung beschäftigt sich mit dem Problem, für das Einstellen einer Raumlage eines Fahrzeugs relativ zu einem Untergrund, auf dem das Fahrzeug mit seinen Rädern steht, eine Möglichkeit aufzuzeigen, die sich insbesondere für Windkanalmessungen eignet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, mehreren oder allen Fahrzeugrädern jeweils eine lineare Stelleinrichtung zuzuordnen, mit deren Hilfe im Bereich des jeweiligen Rads ein Abstand zwischen dem Untergrund und einer Fahrzeugkarosserie einstellbar ist. Ferner sind den Stelleinrichtungen Messeinrichtungen zugeordnet, mit denen im Bereich des jeweiligen Rads der Abstand zwischen dem Untergrund und der Fahrzeugkarosserie ermittelbar ist. Außerdem ist eine mit den Messeinrichtungen gekoppelte Steuerung zum Betätigen der Stelleinrichtungen vorgesehen. Mit der erfindungsgemäßen Einstellvorrichtung lässt sich bei jedem mit einer solchen Stelleinrichtung ausgestatteten Rad der Abstand zwischen Untergrund und Fahrzeugkarosserie einstellen. Dabei sind die einzelnen Stelleinrichtungen unabhängig voneinander betätigbar, so dass es mit Hilfe der Steuerung möglich ist, unterschiedliche Raumlageparameter des Fahrzeugs einzustellen, wie zum Beispiel ein Fahrzeugbodenabstand, also insbesondere der Abstand zwischen dem Untergrund und einer bestimmten, vorzugsweise am Fahrzeugboden angeordneten Referenzstelle der Fahrzeugkarosserie, ein Fahrzeugrollwinkel, also die Neigung des Fahrzeugs gegenüber dem Untergrund um eine Fahrzeuglängsachse, sowie ein Fahrzeugnickwinkel, also die Neigung des Fahrzeugs gegenüber dem Untergrund um eine Fahrzeugquerachse.

Besonders vorteilhaft ist dabei eine Ausführungsform, bei welcher die Steuerung bezüglich des Fahrzeugs extern angeordnet ist. Insbesondere kann die Steuerung in einem Kontrollzentrum des Windkanals angeordnet sein. Hierdurch ist es insbesondere möglich, die Raumlage des Fahrzeugs gegenüber dem Untergrund zu verändern, ohne hierzu den Messbetrieb unterbrechen zu müssen. Die Prüfstandszeiten und somit die Prüfstandskosten können dadurch erheblich reduziert werden. Besonders vorteilhaft sind dabei Stelleinrichtungen, die zusammen mit der jeweiligen Messeinrichtung jeweils eine Einheit bilden, die insbesondere vollständig vormontierbar ist und als Einheit am Fahrzeug anstelle eines dem jeweiligen Rad zugeordneten Feder- und/oder Dämpferbeins anbringbar ist. Beispielsweise kann die jeweilige Messeinrichtung hierzu an die zugehörige Stelleinrichtung angebaut oder darin eingebaut oder darin integriert sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht eines Fahrzeugs, das mit einer Einstellvorrichtung gekoppelt ist,
- Fig. 2: eine stark vereinfachte Ansicht im Bereich einer Radaufhängung des Fahrzeugs,
- Fig. 3: eine perspektivische Ansicht einer Verstelleinrichtung.

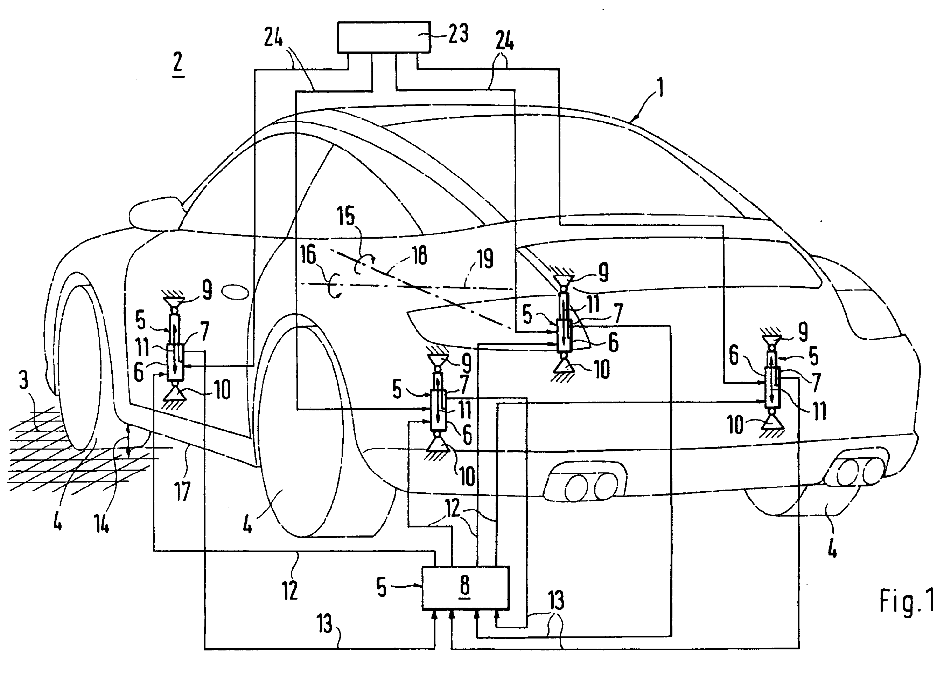

Fig. 1 zeigt ein Fahrzeug 1, bei dem es sich vorzugsweise um ein Sportfahrzeug, insbesondere um ein Rennfahrzeug handelt. Das Fahrzeug 1 ist in einem Prüfstand 2 angeordnet, bei dem es sich vorzugsweise um einen Windkanal handelt. Der Prüfungstand 2 besitzt einen Boden 3, der für das Fahrzeug 1 einen Untergrund bildet, der im folgenden ebenfalls mit 3 bezeichnet wird. Das Fahrzeug 1 steht mit seinen Rädern 4 auf diesem Untergrund 3.

Um die Raumlage des Fahrzeugs 1 relativ zum Untergrund 3 einstellen oder vorgeben zu können, ist eine Einstellvorrichtung 5 vorgesehen. Diese umfasst mehrere lineare Stelleinrichtungen 6, mehrere Messeinrichtungen 7 sowie eine Steuerung 8. Die Stelleinrichtungen 6 sind dabei jeweils einem der Räder 4 zugeordnet. Im gezeigten Beispiel ist jedem Rad 4 eine solche Stelleinrichtung 6 zugeordnet. Grundsätzlich ist jedoch auch eine von der Anzahl der Räder 4 unterschiedliche Anzahl an Stelleinrichtungen 6 denkbar, insbesondere bei Zwillingsrädern. Jede lineare Stelleinrichtung 6 stützt sich einerseits an einer Fahrzeugkarosserie 9 und andererseits mittelbar, zum Beispiel über einen Querlenker 10, am jeweiligen Rad 4 ab. Die jeweilige Stelleinrichtung 6 kann den Abstand zwischen ihren Abstützstellen verändern, also einen bidirektionalen Hub durchführen, was in Fig. 1 durch Doppelpfeile 11 angedeutet ist. Der Einbau der Stelleinrichtungen 6 erfolgt zweckmäßig so, dass ihre Hubrichtung 11 im wesentlichen senkrecht zum Untergrund 3 orientiert ist. Mit Hilfe der jeweiligen Stelleinrichtung 6 kann im Bereich des jeweiligen Rads 4 ein Abstand zwischen dem Untergrund 3 und der Fahrzeugkarosserie 9 verändert beziehungsweise gezielt eingestellt werden.

Die Messeinrichtungen 7 sind jeweils einer der Stelleinrichtungen 6 zugeordnet. Vorzugsweise ist für jede Stelleinrichtung 6 eine solche Messeinrichtung 7 vorgesehen. Die Messeinrichtungen 7 dienen dazu, im Bereich des jeweiligen Rads 4 den Abstand zwischen dem Untergrund 3 und der Fahrzeugkarosserie 9 zu ermitteln. Hierzu erfasst die jeweilige Messeinrichtung 7 eine mit besagtem Abstand korrelierte Größe. Insbesondere kann die Messeinrichtung 7 den Hub 11 der jeweiligen Stelleinrichtung 6 ermitteln. Ebenso ist es grundsätzlich möglich, die Messeinrichtungen 7 so auszugestalten, dass sie den jeweiligen Abstand direkt messen, beispielsweise mittels Ultraschall oder mittels eines den Untergrund 3 kontaktierenden Fühlers.

Die Steuerung 8 ist einerseits über Steuerleitungen 12 mit den Stelleinrichtungen 6 verbunden und andererseits über Signalleitungen 13 mit den Messeinrichtungen 7. Die Steuerung 8 ist zum Betätigen der Stelleinrichtungen 6 ausgestaltet, wobei sie insbesondere die einzelnen Stelleinrichtungen 6 individuell und unabhängig voneinander ansteuern kann. Über die Messeinrichtungen 7 kennt die Steuerung 8 die momentane Raumlage des Fahrzeugs 1 relativ zum Untergrund 3. Mit Hilfe der Stelleinrichtungen 6 kann die Steuerung 8 eine gewünschte Raumlage für das Fahrzeug 1 relativ zum Untergrund 3 einstellen.

Grundsätzlich könnte die Steuerung 8 intern, also im Inneren des Fahrzeugs 1 angeordnet sein. Bevorzugt ist jedoch die hier gezeigte Ausführungsform, bei welcher die Steuerung 8 bezüglich des Fahrzeugs 1 extern angeordnet ist. Insbesondere kann die Steuerung 8 somit beispielsweise in einem hier nicht gezeigten Kontrollzentrum des Windkanals 2 angeordnet sein. Somit ist es möglich, über die Steuerung 8 die Stelleinrichtungen 5 zu betätigen und die Raumlage des Fahrzeugs 1 zu verändern, während der Windkanal 2 im Betrieb ist.

Mit Hilfe der Einstellvorrichtung 5 lassen sich mehrere, die Raumlage des Fahrzeugs 1 relativ zum Untergrund 3 definierende Parameter einstellen beziehungsweise verändern. Derartige Raumlageparameter sind beispielsweise ein Fahrzeugbodenabstand 14, ein Fahrzeugrollwinkel 15 sowie ein Fahrzeugnickwinkel 16. Der Fahrzeugbodenabstand 14 ist dabei insbesondere zwischen dem Untergrund 3 und einer besonderen Referenzstelle eines Fahrzeugbodens 17 gemessen. Insbesondere handelt es sich hierbei um einen über den gesamten Fahrzeugboden 17 gemittelten Abstand 14. Der Fahrzeugrollwinkel 15 entspricht der Neigung des Fahrzeugs 1 um eine Fahrzeuglängsachse 18 relativ zum Untergrund 3. Derartige Rollbewegungen können im Fahrbetrieb beispielsweise beim Durchfahren von Kurven entstehen. Der Fahrzeugnickwinkel 16 entspricht der Neigung des Fahrzeugs 1 um eine Fahrzeugquerachse 19 relativ zum Untergrund 3. Derartige Nickbewegungen können beim Beschleunigen oder beim Abbremsen des Fahrzeugs 1 entstehen.

Bei einer besonders vorteilhaften Ausführungsform der Steuerung 8 kann diese so ausgestaltet sein, dass sie die einzelnen Stellantriebe 6 in Abhängigkeit von eingebbaren oder vorgebbaren Raumlageparametern, wie zum Beispiel der Fahrzeugbodenabstand 14 und/oder der Fahrzeugrollwinkel 15 und/oder der Fahrzeugnickwinkel 16, automatisch ansteuert, um die gewünschte Raumlageparameter, also letztlich um die gewünschte Raumlage des Fahrzeugs 1 relativ zum Untergrund 3 einzustellen. Die Steuerung 8 rechnet somit die jeweils gewünschte Raumlage selbstständig in entsprechende Steuerbefehle des jeweiligen beziehungsweise der jeweiligen Stelleinrichtungen 6 um.

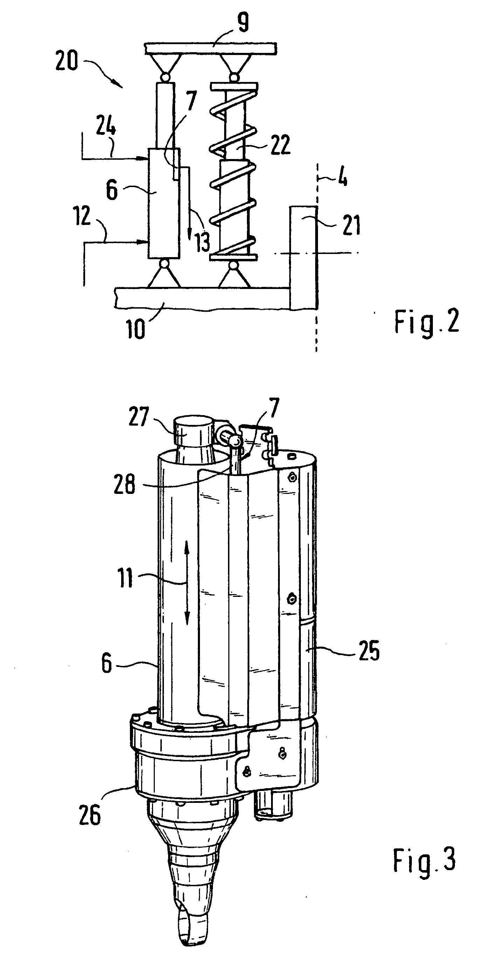

Entsprechend Fig. 2 sind die Stelleinrichtungen 6 am jeweiligen Rad 4 im Bereich einer Radaufhängung 20 des jeweiligen Rads 4 angeordnet. Angedeutet ist in Fig. 2 ein Querlenker 10, an dem sich ein Radträger oder Radlager 21 abstützt und der sich in herkömmlicher Weise über ein Feder- und/oder Dämpferbein 22 an der Fahrzeugkarosserie 9 abstützt, zum Beispiel im Bereich eines hier nicht näher bezeichneten Federbeindoms. Bei der in Fig. 2 gezeigten Ausführungsform ist die jeweilige Stelleinrichtung 6 im Bereich des jeweiligen Rads 4 parallelwirkend zu dem diesem Rad 4 zugeordneten Feder- und/oder Dämpferbein 22 angeordnet. Ebenso ist es grundsätzlich möglich, die jeweilige Stelleinrichtung 6 im Bereich des Rads 4 anstelle des jeweiligen Feder- und/oder Dämpferbeins 22 anzuordnen.

Die Stelleinrichtungen 6 können als elektrische oder als pneumatische oder als hydraulische Stelleinrichtungen 6 ausgestaltet sein und dementsprechend mit elektrischer oder pneumatischer oder hydraulischer Energie angetrieben sein. Für die Versorgung der Stellantriebe 6 mit Antriebsenergie kann eine Energieversorgung 23 vorgesehen sein, die über entsprechende Versorgungsleitungen 24 auf geeignete Weise mit den einzelnen Stelleinrichtungen 6 gekoppelt ist. Grundsätzlich kann eine derartige Energieversorgung 23 intern im Fahrzeug 1 angeordnet sein beziehungsweise zumindest teilweise durch fahrzeugeigene Systeme gebildet sein. Ebenso kann die Energieversorgung 23 bezüglich des Fahrzeugs 1 extern angeordnet sein. Hierdurch ist es insbesondere möglich, als Energieversorgung 23 eine im jeweiligen Prüfstand beziehungsweise Windkanal 2 ohnehin vorhandene Energieversorgung zu verwenden, indem lediglich die Versorgungsleitungen 24 an die bestehende Energieversorgung 23 angeschlossen werden. Die externe Energieversorgung 23 ist unabhängig vom Fahrzeug 1, so dass die Einstellvorrichtung 5 hierdurch autark ist.

Bei den hier gezeigten Ausführungsformen ist die jeweilige Messeinrichtung 7 an die jeweilige Stelleinrichtung 6 angebaut beziehungsweise darin eingebaut. Insbesondere zeigt Fig. 3 eine integrale Bauweise, bei welcher die Messeinrichtung mit der Stelleinrichtung 6 eine bauliche Einheit bildet.

Bei der in Fig. 3 gezeigten Ausführungsform ist die gezeigte Stelleinrichtung 6 als elektromotorische Stelleinrichtung 6 ausgestaltet. Die Stelleinrichtung 6 umfasst insbesondere einen Elektromotor 25, der beispielsweise einen Spindeltrieb 26 antreibt, um eine Hubstange 27 entsprechend dem jeweils gewünschten Hub 11 auszufahren oder einzufahren. Die Messeinrichtung 7 umfasst hier einen linearen Weggeber 28, der mit der Hubstange 27 gekoppelt ist, so dass er der Hubbewegung der Hubstange 27 folgt. Eine entsprechende Sensorik misst die Relatiwerstellung des Weggebers 28 bezüglich eines ortsfesten Bestandteils der Messeinrichtung 7.

Die Stelleinrichtungen 6 können gemäß einer besonders vorteilhaften Ausführungsform so ausgestaltet sein, dass sie im eingebauten Zustand ein Verfahren des Fahrzeugs 1 relativ zum Untergrund 3 ermöglichen. Hierdurch können die Stelleinrichtungen 6 beispielsweise in einer geeigneten Werkstatt eingebaut werden, und das mit den Stelleinrichtungen 6 ausgestattete Fahrzeug 1 kann durch Schieben oder durch Eigenantrieb in den von der Werkstatt entfernten Prüfstand oder Windkanal 2 gefahren werden. Beispielsweise kann die jeweilige Stelleinrichtung 6 in einem Passivzustand geschaltet werden, der es der Stelleinrichtung ermöglicht, Hubbewegungen des jeweiligen Feder- und/oder Dämpferbeins 22 mehr oder weniger zu folgen.

## Patentansprüche

1. Vorrichtung zum Einstellen einer Raumlage eines Fahrzeugs (1) relativ zu einem Untergrund (3), auf dem das Fahrzeug (1) mit seinen Rädern (4) steht, Insbesondere in einem Windkanal (2),
- mit mehreren, jeweils einem der Räder (4) zugeordneten linearen Stellelnrichtungen (6), die Jeweils am Fahrzeug (1) im Bereich des jewelligen Rads (4) angeordnet sind und mit denen im Bereich des jeweiligen Rads (4) ein Abstand zwischen dem Untergrund (3) und einer Fahrzeugkarosserie (9) einstellbar Ist,
- mit mehreren, jeweils einer der Stelleinrichtungen (6) zugeordneten Messeinrichtungen (7) zum Ermitteln des Abstands zwischen dem Untergrund (3) und der Fahrzeugkarosserie (9) im Bereich des jeweiligen Rads (4),
- mit einer mit den Messeinrichtungen (7) gekoppelten Steuerung (8) zum Betätigen der Stelleinrichtungen (6),
- wobei die jeweilige Messeinrichtung (7) an die jewellige Stelleinrichtung (6) angebaut oder darin eingebaut oder integriert ist,
**dadurch gekennzeichnet, dass** die jewellige Stelleinrichtung (6) am Fahrzeug (1) Im Bereich des jewelligen Rads (4) anstelle eines dem jeweiligen Rad (4) zugeordneten Feder- und/oder Dämpferbeins (22) angeordnet Ist.

2. Einstellvorrichtung nach Anspruch 1,
**dadurch gekennzeichnet,**
- **dass** jedem Rad (4) eine solche Stelleinrichtung (6) zugeordnet Ist, und/oder
- **dass** jeder Stelleinrichtung (6) eine solche Messeinrichtung (7) zugeordnet ist.

3. Einstellvorrichtung nach Anspruch 1 oder 2,
**dadurch gekennzeichnet,**
**dass** die Steuerung (8) bezüglich des Fahrzeugs (1) extern, insbesondere in einem Kontrollzentrum des Windkanals (2), angeordnet ist.

4. Einstellvorrichtung nach einem der Ansprüche 1 bis 3,
**dadurch gekennzeichnet,**
**dass** die Stelleinrichtungen (6) mit elektrischer oder pneumatischer oder hydraulischer Energie angetrieben sind.

5. Einstellvorrichtung nach einem der Ansprüche 1 bis 4,
**dadurch gekennzeichnet,**
**dass** zum Versorgen der Stellantriebe (6) mit Energie eine bezüglich des Fahrzeugs (1) extern angeordnete Energieversorgung (23) vorgesehen ist, die über entsprechende Versorgungsleitungen (24) mit den Stelleinrichtungen (6) gekoppelt ist.

6. Einstellvorrichtung nach einem der Ansprüche 1 bis 5,
**dadurch gekennzeichnet,**
**dass** die Steuerung (8) so ausgestaltet ist, dass sie in Abhängigkeit eingebbarer oder vorgebbarer Raumlageparameter, wie zum Beispiel eines Fahrzeugbodenabstands (14) und/oder eines Fahrzeugrollwinkels (15) und/oder eines Fahrzeugnickwinkels (16), die Stellantriebe (6) automatisch zum Einstellen der Raumlageparameter ansteuert.

7. Einstellvorrichtung nach einem der Ansprüche 1 bis 6,
**dadurch gekennzeichnet,**
**dass** die Stelleinrichtungen (6) so ausgestaltet sind, dass das Fahrzeug (1) mit eingebauten Stelleinrichtungen (6) relativ zum Untergrund (3) verfahrbar ist.

8. Einstellvorrichtung nach einem der Ansprüche 1 bis 7,
**dadurch gekennzeichnet,**
**dass** die jeweilige Stelleinrichtung (6) als elektromotorische Stelleinrichtung (6) ausgestaltet ist, die insbesondere einen Spindeltrieb (26) aufweist.

## Claims

1. Apparatus for adjusting a position of a vehicle (1) relative to an underlying surface (3) on which the vehicle (1) is standing with its wheels (4), in particular in a wind tunnel (2),
- having a plurality of linear actuating devices (6) which are each assigned to one of the wheels (4) and are each arranged on the vehicle (1) in the region of the respective wheel (4) and with which a distance between the underlying surface (3) and a vehicle body (9) in the region of the respective wheel (4) can be adjusted,
- having a plurality of measuring devices (7) which are each assigned to one of the actuating devices (6) and have the purpose of determining the distance between the underlying surface (3) and the vehicle body (9) in the region of the respective wheel (4),
- having a controller (8) which is coupled to the measuring devices (7) and has the purpose of activating the actuating devices (6),
- wherein the respective measuring device (7) is built onto the respective actuating device (6) or built into it or integrated therein,
**characterized in that** the respective actuating device (6) is arranged on the vehicle (1) in the region of the respective wheel (4) instead of a suspension and/or shock absorber unit (22) which is assigned to the respective wheel (4).

2. Adjustment apparatus according to Claim 1,
**characterized**
- **in that** each wheel (4) is assigned to such an actuating device (6), and/or
- **in that** each actuating device (6) is assigned to such a measuring device (7).

3. Adjustment apparatus according to Claim 1 or 2,
**characterized**
**in that** the controller (8) is arranged externally wi9th respect to the vehicle (1), in particular in a control centre of the wind tunnel (2).

4. Adjustment apparatus according to one of Claims 1 to 3,
**characterized**
**in that** the actuating devices (6) are driven with electrical or pneumatic or hydraulic energy.

5. Adjustment apparatus according to one of Claims 1 to 4,
**characterized**
**in that** in order to supply the actuating drives (6) with energy an energy supply (23) which is arranged externally with respect to the vehicle (1) is provided, said energy supply (23) being coupled via corresponding supply lines (24) to the actuating devices (6).

6. Adjustment apparatus according to one of Claims 1 to 5,
**characterized**
**in that** the controller (8) is configured in such a way that it actuates the actuating drives (6) automatically to set the position parameters, said actuation occurring as a function of position parameters which can be input or predefined, such as, for example, vehicle ground clearance (14) and/or a vehicle rolling angle (15) and/or a vehicle pitching angle (16).

7. Adjustment apparatus according to one of Claims 1 to 6,
**characterized**
**in that** the actuating devices (6) are configured in such a way that the vehicle (1) can be moved relative to the underlying surface (3) using built-in actuating devices (6).

8. Adjustment apparatus according to one of Claims 1 to 7,
**characterized**
**in that** the respective actuating device (6) is configured as an electric-motor-operated actuating device (6) which has, in particular, a spindle drive (26).

## Revendications

1. Dispositif pour ajuster la position d'un véhicule (1) par rapport à un subjectile (3) sur lequel le véhicule (1) s'appuie avec ses roues (4), en particulier dans une soufflerie (2), comprenant
- plusieurs dispositifs de réglage linéaires (6) associés respectivement à l'une des roues (4), lesquels sont disposés respectivement sur le véhicule (1) dans la région de la roue respective (4) et avec lesquels, dans la région de la roue respective (4), une distance entre le subjectile (3) et une carrosserie du véhicule (9) peut être ajustée,
- plusieurs dispositifs de mesure (7) associés respectivement à l'un des dispositifs de réglage (6) pour détecter la distance entre le subjectile (3) et la carrosserie du véhicule (9) dans la région de la roue respective (4),
- une commande (8) accouplée aux dispositifs de mesure (7) pour actionner les dispositifs de réglage (6),
le dispositif de mesure respectif (7) étant monté sur le dispositif de réglage respectif (6) ou étant incorporé ou intégré dans celui-ci, **caractérisé en ce que** le dispositif de réglage respectif (6) est disposé sur le véhicule (1) dans la région de la roue respective (4) à l'emplacement d'une jambe de force et/ou d'une jambe d'amortissement (22) associée à la roue respective (4).

2. Dispositif d'ajustement selon la revendication 1, **caractérisé en ce que**
- un tel dispositif de réglage (6) est associé à chaque roue (4) et/ou
- un tel dispositif de mesure (7) est associé à chaque dispositif de réglage (6).

3. Dispositif d'ajustement selon la revendication 1 ou 2,
**caractérisé en ce que**
la commande (8) est disposée, par rapport au véhicule (1), à l'extérieur, en particulier dans un centre de contrôle de la soufflerie (2).

4. Dispositif d'ajustement selon l'une quelconque des revendications 1 à 3,
**caractérisé en ce que**
les dispositifs de réglage (6) sont entraînés avec une énergie électrique ou pneumatique ou hydraulique.

5. Dispositif d'ajustement selon l'une quelconque des revendications 1 à 4,
**caractérisé en ce que**
pour l'alimentation des entraînements de réglage (6) en énergie, il est prévu une alimentation en énergie (23) disposée à l'extérieur par rapport au véhicule (1), laquelle est accouplée aux dispositifs de réglage (6) par le biais de conduites d'alimentation correspondantes (24).

6. Dispositif d'ajustement selon l'une quelconque des revendications 1 à 5,
**caractérisé en ce que**
la commande (8) est configurée de telle sorte qu'elle commande automatiquement, en fonction de paramètres de position pouvant être entrés ou prédéfinis, comme par exemple une distance au sol du véhicule (14) et/ou un angle de roulis du véhicule (15) et/ou un angle d'inflexion du véhicule (16), les entraînements de réglage (6) en vue de l'ajustement des paramètres de position.

7. Dispositif d'ajustement selon l'une quelconque des revendications 1 à 6,
**caractérisé en ce que**
les dispositifs de réglage (6) sont configurés de telle sorte que le véhicule (1) puisse être déplacé par rapport au subjectile (3) avec des dispositifs de réglage incorporés (6).

8. Dispositif d'ajustement selon l'une quelconque des revendications 1 à 7,
**caractérisé en ce que**
le dispositif de réglage respectif (6) est configuré sous forme de dispositif de réglage (6) à moteur électrique qui présente notamment un entraînement à broche (26).
